# FASCICULE DE BREVET EUROPEEN

(11) **EP 1 450 164 B1**
(45) Date de publication et mention de la délivrance du brevet: **24.07.2013**
(21) Numéro de dépôt: 04290339.3
(22) Date de dépôt: 10.02.2004
(51) Int. Cl.: G01P 15/10, G01P 1/00, G01L 1/18, G01P 15/097

(54) **Capteur avec organe vibrant et écran contre radiation thermique**
Sensor mit vibrierendem Aufnehmer und Abschirmung für thermische Strahlung
Sensor with vibrating element and thermic radiation shield

(30) Priorité: 24.02.2003 FR 0302220
(43) Date de publication de la demande: 25.08.2004
(73) Titulaire: Sagem Défense Sécurité, 75015 Paris (FR)
(72) Inventeur: Onfroy, Philippe, 95100 Argenteuil (FR)
(74) Mandataire: Fruchard, Guy

(56) Documents cités:
- US-A- 4 912 990
- US-A- 5 188 983
- US-A- 5 417 115
- US-A- 5 458 000
- US-A- 5 559 358
- US-A- 5 962 786
- US-A- 6 161 440
- PATENT ABSTRACTS OF JAPAN vol. 1997, no. 08, 29 août 1997 (1997-08-29) & JP 09 105636 A (MURATA MFG CO LTD), 22 avril 1997 (1997-04-22)

## Description

La présente invention concerne un capteur vibrant, notamment un accéléromètre ou un gyromètre.

### ARRIERE PLAN DE L'INVENTION

L'invention concerne plus particulièrement les capteurs comprenant une cellule sensible comportant une plaque dans laquelle sont délimités une partie formant un organe support et au moins un élément vibrant associé à des moyens d'excitation. Les moyens d'excitation permettent de faire vibrer l'élément vibrant et de détecter la fréquence de vibration de celui-ci.

Dans le cas d'un accéléromètre, un élément inertiel est relié à l'élément vibrant. Dans la plupart des cas cet élément inertiel est une masse elle-même délimitée dans la plaque et mobile par rapport à l'organe support. Lorsque le capteur est soumis à une accélération, la masse exerce une force sur l'élément vibrant. Cette force modifie la fréquence de vibration de telle manière que la variation de la fréquence de vibration de l'élément vibrant permet de déterminer l'accélération à laquelle le capteur est soumis.

Pour éviter un couplage mécanique entre l'élément vibrant et l'organe support un cadre intermédiaire est généralement prévu. Cette isolation mécanique provoque en outre un allongement du chemin thermique. Cela présente l'avantage d'avoir une température plus homogène au niveau de l'élément vibrant et ainsi de diminuer les contraintes d'origine thermique et leurs effets parasite. En dépit de ces dispositions, il a été constaté qu'une variation de la fréquence de vibration de l'élément vibrant continuait à survenir indépendamment de la variation de l'accélération auquel le capteur était soumis vis-à-vis de la mesure d'accélération il s'agit de variations parasites de la fréquence. Tant qu'elles subsistent ces variations parasites affectent la précision de mesure de l'accélération.

### OBJET DE L'INVENTION

La présente invention est fondée sur la constatation qui n'avait jamais été faite antérieurement selon laquelle l'écart de température entre différentes parties de la cellule, et notamment entre l'organe vibrant et l'organe support ou la masse de mesure, résulte de façon non négligeable d'un échange thermique par radiation entre la cellule et le boîtier entourant la cellule. En particulier, lorsque le boîtier est à une température supérieure à celle de la cellule, le boîtier se comporte comme une source de chaleur qui réchauffe progressivement la cellule par radiation. Les parties de la cellule de plus faible inertie thermique, notamment l'organe vibrant, sont ainsi portées plus rapidement que d'autres à la température du boîtier, ce qui provoque des contraintes entre les différentes parties de la cellule et donc une variation de la fréquence de vibration de l'élément vibrant.

A partir de ces constatations originales, lesquelles font partie de l'invention, un objet de l'invention est de réduire les variations parasites de fréquence résultant d'un échange thermique par radiation à l'intérieur du capteur.

### BREVE DESCRIPTION DE L'INVENTION

Selon l'invention on propose un capteur vibrant comportant une cellule fixée dans un boîtier, la cellule comportant un organe support et un organe vibrant relié à l'organe support et alimenté par un circuit d'excitation pour être sensible à des mouvements auxquels le capteur est soumis, le capteur comportant au moins un élément de masquage thermique indépendant du circuit d'excitation s'étendant entre l'organe vibrant et au moins une paroi du boîtier.

Ainsi, l'élément de masquage thermique arrête une partie au moins de la chaleur transmise par radiation entre le boîtier et l'organe vibrant, de sorte que l'organe vibrant est protégé d'un échauffement par radiation pendant un temps suffisant pour permettre aux parties de la cellule de plus forte inertie thermique de monter en température de façon sensiblement homogène avec l'organe vibrant.

Selon un mode de réalisation préféré du capteur selon l'invention, l'élément de masquage est fixé au boîtier en étant espacé de celui-ci. De préférence, l'élément de masquage est relié au boîtier par une partie de liaison présentant une section transversale et une longueur adaptées pour contrôler un échauffement par conduction par l'élément de masquage. On évite ainsi une montée en température trop rapide de l'élément de masquage qui deviendrait alors lui-même une source de radiation par rapport à la cellule.

### BREVE DESCRIPTION DES DESSINS

D'autres caractéristiques et avantages de l'invention apparaîtront à la lecture de la description qui suit de deux modes de réalisation particuliers non limitatifs de l'invention en relation avec les figures ci-jointes parmi lesquelles :
- la figure 1 est une représentation en perspective éclatée d'un premier mode de réalisation de l'invention,
- la figure 2 est une vue analogue à celle de la figure 1 d'un second mode de réalisation de l'invention.

Sur les figures, les épaisseurs respectives des différentes couches n'ont pas été respectées afin de mieux faire comprendre l'invention.

### DESCRIPTION DETAILLEE DE L'INVENTION

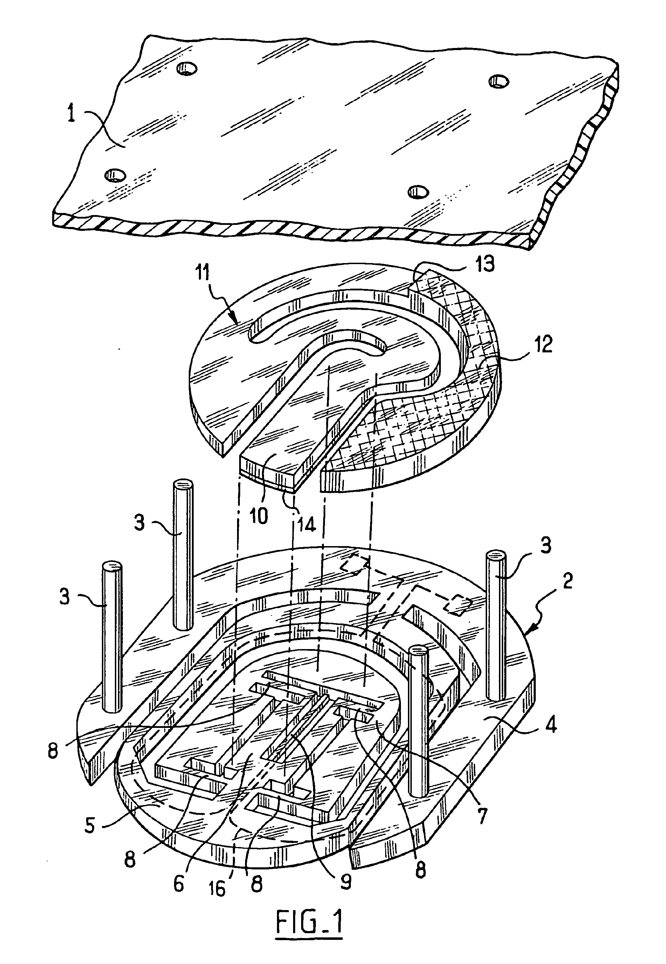

En référence à la figure 1, le capteur selon l'invention comporte de façon connue en soi un boîtier 1, dont une partie de paroi seulement a été représentée sur la figure, sur lequel une cellule généralement désignée en 2 est fixée par des colonnettes 3.

Dans le mode de réalisation illustré, la cellule 2 comporte un organe support 4 en U auquel est fixé un cadre de découplage 5 portant des masses 6 et 7 reliées entre elles par des charnières 8 directement taillées dans la plaque formant la cellule 2. Egalement de façon connue en soi la cellule comporte un organe vibrant 9 en forme de barreau taillé dans la masse dont les extrémités sont respectivement reliées aux masses 6 et 7. Le capteur comprend par ailleurs un circuit d'excitation piézo-électrique 16 illustré en tiret sur les figures, et un circuit de mesure portés par la face de la cellule opposée à celle qui est visible sur la figure.

Selon l'invention, le capteur comprend en outre un élément de masquage 10 fixé à l'extrémité d'une partie de liaison en spirale 11 dont l'extrémité opposée à l'élément de masquage 10 comporte une portion 12 en surépaisseur délimitée par un épaulement 13. Lors du montage du capteur la portion en surépaisseur 12, qui est hachurée sur la figure 1, est fixée à la face interne de la paroi du boîtier 1, par exemple par collage, de sorte que le reste de la partie de liaison 11 et l'élément de masquage 10 sont espacés de la paroi du boîtier 1 d'une distance égale à la hauteur de l'épaulement 13.

Dans le mode de réalisation illustré l'élément de masquage 10 est de forme sensiblement rectangulaire et recouvre non seulement l'élément vibrant 9 mais également une partie adjacente de la cellule comme illustré par les traits en tirets mixtes sur la figure 1. En outre la partie de liaison qui entoure l'élément de masquage 10 s'étend également à l'aplomb d'une partie de la cellule adjacente à l'organe vibrant 9.

Lorsque la température du boîtier 1 est supérieure à celle de la cellule 2, la paroi du boîtier se comporte comme une source de chaleur et un transfert thermique s'effectue donc entre la paroi du boîtier 1 et la cellule 2 non seulement par conduction par l'intermédiaire des colonnettes 3, mais également par radiation. L'élément de masquage 10 qui est interposé entre la paroi du boîtier 1 et la cellule 2, protège donc l'organe vibrant 9 contre les radiations tant que la température de l'élément de masquage 10 n'est pas supérieure à celle de l'organe vibrant 9. On notera à ce propos que l'élément de masquage 10 se réchauffe progressivement non seulement sous l'effet d'un transfert thermique par radiation entre la paroi du boîtier 1 et l'élément de masquage 10, mais également sous l'effet d'un transfert thermique par conduction du fait de la mise en contact de la portion en surépaisseur 12 avec la paroi du boîtier 1. Ce transfert thermique par conduction passe par la partie de liaison 11.

Selon un aspect de l'invention, la partie de liaison 11 est réalisée en un matériau approprié et présente une section transversale et une longueur adaptées pour contrôler un échauffement par conduction de l'élément de masquage 10 de façon que la montée en température de l'élément de masquage 10 soit elle-même adaptée à l'élévation de température du reste de la cellule afin que l'élévation de température de l'ensemble de la cellule soit à peu près homogène sous l'effet des différents transferts thermiques auxquels la cellule est soumise.

L'épaisseur de l'élément de masquage est également déterminée en fonction des formes respectives de l'élément de masquage 10, de la partie de liaison 11 et de la cellule 2. A titre d'exemple non limitatif, dans le cas d'une cellule ayant la configuration illustrée sur la figure 1 et réalisée dans une plaque de quartz d'une épaisseur de 500 µm, un écran conforme à celui illustré sur la figure 1 a été réalisé en verre avec une épaisseur de 100 µm.

On remarquera que dans le cas inverse où le boîtier est à une température inférieure à la cellule 2, les transferts thermiques radiatifs changent de sens, la paroi du boîtier se comportant comme un puits de chaleur. Dans ce cas l'élément de masquage, comme précédemment, minimise ces transferts thermiques radiatifs.

L'efficacité de l'écran peut être améliorée par un revêtement réfléchissant 14 sur la face de l'élément de masquage 10 qui est en regard de l'organe vibrant 9. Ce revêtement réfléchissant peut être réalisé par dépôt sous vide d'une mince couche d'or sur l'élément de masquage 10 et, si nécessaire, sur une portion ou sur la totalité de la partie de liaison 11.

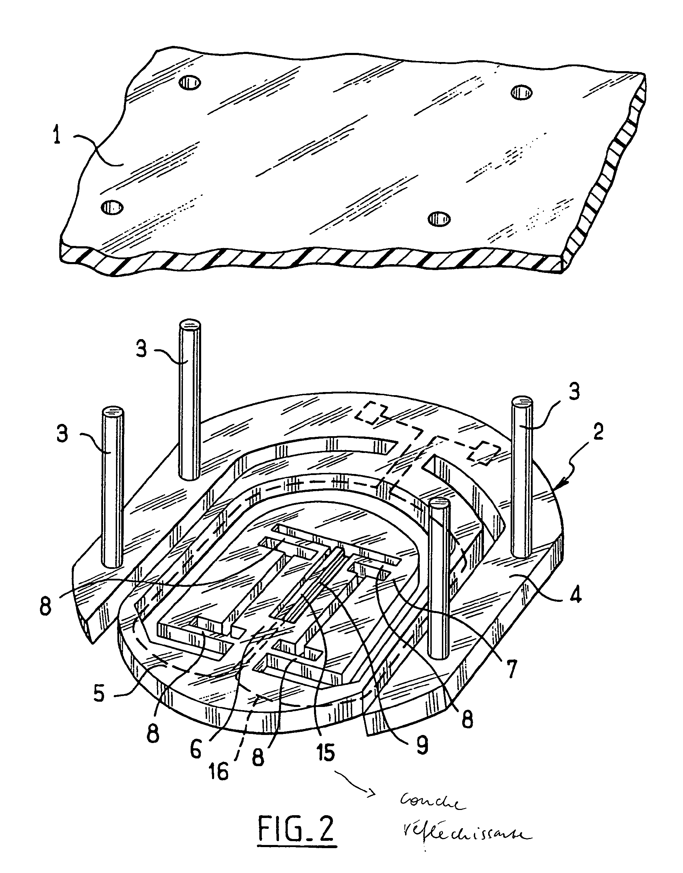

La figure 2 illustre un second mode de réalisation de l'invention dans lequel l'élément de masquage 10 fixé au boîtier a été remplacé par un élément de masquage formé par une couche réfléchissante 15 recouvrant l'organe vibrant 9. Comme précédemment la couche réfléchissante 15 peut également recouvrir une partie adjacente de la cellule, par exemple les masses 6 et 7 ainsi que les charnières 8. Ce mode de réalisation de l'élément de masquage présente l'avantage d'être isolé de tout transfert thermique par conduction.

Bien entendu, l'invention n'est pas limitée aux modes de réalisation décrits et est susceptible de variantes de réalisation qui apparaîtront à l'homme de métier sans sortir du cadre de l'invention tel que défini par les revendications.

En particulier, bien que dans le premier mode de réalisation l'écran ait été illustré comme fixé au boîtier 1, l'écran peut également être fixé à la cellule. Dans ce cas il conviendra toutefois de veiller à ce que l'écran soit suffisamment espacé de l'organe vibrant pour ne pas perturber le fonctionnement mécanique de l'organe vibrant. L'élément de masquage peut également être porté par la cellule en étant réalisé de façon intégrée à la cellule lors de la fabrication de celle-ci.

Bien que l'invention ait été décrite en relation avec de modes de réalisation comportant un élément de masquage sur un côté seulement de la cellule, on peut prévoir des éléments de masquage de part et d'autre de la cellule de façon à protéger l'élément vibrant 9 contre des radiations provenant des parois en regard du boîtier 1. Toutefois, on notera que les électrodes qui s'étendent sur une des faces de la cellule sont généralement réalisées sous forme d'une couche d'or réfléchissante de sorte que la face de la cellule qui porte les électrodes a moins besoin d'être protégée contre un transfert thermique par radiation que la face opposée.

Lors de la réalisation du ou des éléments de masquage, et le cas échéant des parties de liaison qui les portent, les dimensions sont calculées en fonction du bilan thermique résultant de la structure de la cellule et de la configuration du boîtier par rapport à la cellule. Bien que dans le mode de réalisation de la figure 1 l'espacement entre la paroi du boîtier et l'élément de masquage 10 ait été illustré comme obtenu par une surépaisseur de la partie de liaison, cet espacement peut être réalisé par une cale ou tout simplement par l'épaisseur de la couche de colle servant à fixer la partie de liaison sur la paroi du boîtier.

Bien que l'invention ait été décrite en relation avec un accéléromètre à masse suspendue, l'invention s'applique à tout capteur vibrant dans lequel l'élément vibrant risque d'être soumis à des contraintes différentielles par rapport à l'organe support en raison d'un transfert thermique non homogène sur différentes parties du capteur. L'invention s'applique en particulier à un gyromètres étoile, notamment un gyromètre tel que défini dans le document FR-A-2 741 151.

L'invention s'applique quelle que soit la structure de la cellule, y compris lorsque celle-ci ne comprend pas de cadre intermédiaire.

## Revendications

1. Capteur vibrant comportant une cellule (2) fixée dans un boîtier (1), la cellule comprenant un organe support (4) et un organe vibrant (9) relié à l'organe support et alimenté par un circuit d'excitation (16) pour être sensible à des mouvements auxquels le capteur est soumis, **caractérisé en ce qu'**il comporte au moins un élément de masquage thermique (10) indépendant du circuit d'excitation (16) et s'étendant entre l'organe vibrant et au moins une paroi du boîtier (1), l'élément de masquage étant distinct de la cellule et agencé pour arrêter une partie au moins de la chaleur transmise par radiation entre le boîtier et l'organe vibrant, de sorte que l'organe vibrant est protégé d'un échauffement par radiation pendant un temps suffisant pour permettre aux parties de la cellule de plus forte inertie thermique de monter en température de façon sensiblement homogène avec l'organe vibrant

2. Capteur vibrant selon la revendication 1, **caractérisé en ce que** l'élément de masquage (10) est fixé au boîtier en étant espacé de celui-ci.

3. Capteur vibrant selon la revendication 2, **caractérisé en ce que** l'élément de masquage est porté par une partie de liaison (11).

4. Capteur vibrant selon la revendication 3, **caractérisé en ce que** la partie de liaison (11) comporte une portion en surépaisseur (12).

5. Capteur vibrant selon la revendication 3, **caractérisé en ce que** la partie de liaison (11) est réalisée en un matériau approprié et présente une section transversale et une langueur adaptées pour contrôler un échauffement par conduction de l'élément de masquage (10).

6. Capteur vibrant selon la revendication 3, **caractérisé en ce que** la partie de liaison (11) s'étend en regard d'une partie de la cellule (2) adjacente à l'organe vibrant (9).

7. Capteur vibrant selon la revendication 2, **caractérisé en ce que** sur une face tournée vers l'organe vibrant (9) l'élément de masquage (10) comporte une couche réfléchissante (14).

8. Capteur vibrant selon la revendication 1, **caractérisé en ce que** l'élément de masquage (15) est porté par la cellule.

9. Capteur vibrant comportant une cellule (2) fixée dans un boîtier (1), la cellule comprenant un organe support (4) et un organe vibrant (9) relié à l'organe support et alimenté par un circuit d'excitation (16) pour être sensible à des mouvements auxquels le capteur est soumis, **caractérisé en ce qu'**il comporte au moins un élément de masquage thermique (15) comprenant une couche réfléchissante qui est appliquée sur l'élément vibrant (9) et qui est indépendante du circuit d'excitation (16), l'élément de masquage étant agencé pour arrêter une partie au moins de la chaleur transmise par radiation entre le boîtier et l'organe vibrant, de sorte que l'organe vibrant est protégé d'un échauffement par radiation pendant un temps suffisant pour permettre aux parties de la cellule de plus forte inertie thermique de monter en température de façon sensiblement homogène avec l'organe vibrant.10. Capteur vibrant selon la revendication 9, **caractérisé en ce que** la couche réfléchissante s'étend en outre sur une partie de la cellule adjacente à l'organe vibrant.

10. Capteur vibrant selon la revendication 9, **caractérisé en ce que** la couche réfléchissante s'étend en outre sur une partie de la cellule adjacente à l'organe vibrant.

## Patentansprüche

1. Vibrationssensor, umfassend eine in einem Gehäuse (1) befestigte Zelle (2), wobei die Zelle ein Trägerorgan (4) und ein Vibrationsorgan (9) umfasst, das mit dem Trägerorgan verbunden und durch einen Erregerkreis (16) gespeist ist, um auf Bewegungen zu reagieren, denen der Sensor unterworfen ist, **dadurch gekennzeichnet, dass** er mindestens ein Element zur thermischen Abschirmung (10) umfasst, das unabhängig vom Erregerkreis (16) ist und sich zwischen dem Vibrationsorgan und mindestens einer Gehäusewand (1) erstreckt, wobei das Abschirmelement von der Zelle getrennt und so ausgebildet ist, dass es zumindest einen Teil der zwischen dem Gehäuse und dem Vibrationsorgan durch Strahlung übertragenen Wärme zurückhält, so dass das Vibrationsorgan über einen ausreichenden Zeitraum vor einer Erwärmung durch Strahlung geschützt ist, so dass die Temperatur der Abschnitte der Zelle mit einer höheren thermischen Trägheit im Wesentlichen homogen mit dem Vibrationsorgan steigen kann.

2. Vibrationssensor nach Anspruch 1, **dadurch gekennzeichnet, dass** das Abschirmelement (10) am Gehäuse beabstandet von diesem angebracht ist.

3. Vibrationssensor nach Anspruch 2, **dadurch gekennzeichnet, dass** das Abschirmelement von einem Verbindungsabschnitt (11) getragen wird.

4. Vibrationssensor nach Anspruch 3, **dadurch gekennzeichnet, dass** der Verbindungsabschnitt (11) einen Teil mit einer Verdickung (12) umfasst.

5. Vibrationssensor nach Anspruch 3, **dadurch gekennzeichnet, dass** der Verbindungsabschnitt (11) aus einem geeigneten Material ausgeführt ist und einen Querschnitt und eine Länge aufweist, die so adaptiert sind, dass eine Erwärmung durch das Leitvermögen des Abschirmelements (10) kontrolliert wird.

6. Vibrationssensor nach Anspruch 3, **dadurch gekennzeichnet, dass** sich der Verbindungsabschnitt (11) gegenüber einem Abschnitt der Zelle (2) erstreckt, der benachbart zum Vibrationsorgan (9) ist.

7. Vibrationssensor nach Anspruch 2, **dadurch gekennzeichnet, dass** das Abschirmelement (10) an einer zum Vibrationsorgan (9) gerichteten Seite eine reflektierende Schicht (14) aufweist.

8. Vibrationssensor nach Anspruch 1, **dadurch gekennzeichnet, dass** das Abschirmelement (15) von der Zelle getragen wird.

9. Vibrationssensor, umfassend eine in einem Gehäuse (1) befestigte Zelle (2), wobei die Zelle ein Trägerorgan (4) und ein Vibrationsorgan (9) umfasst, das mit dem Trägerorgan verbunden und durch einen Erregerkreis (16) gespeist ist, um auf Bewegungen zu reagieren, denen der Sensor unterworfen ist, **dadurch gekennzeichnet, dass** er mindestens ein Element zur thermischen Abschirmung (15) mit einer reflektierenden Schicht umfasst, die auf das Vibrationselement (9) aufgebracht ist und die unabhängig vom Erregerkreis (16) ist, wobei das Abschirmelement so ausgebildet ist, dass es zumindest einen Teil der zwischen dem Gehäuse und dem Vibrationsorgan durch Strahlung übertragenen Wärme zurückhält, so dass das Vibrationsorgan über einen ausreichenden Zeitraum vor einer Erwärmung durch Strahlung geschützt ist, so dass die Temperatur der Abschnitte der Zelle mit einer höheren thermischen Trägheit im Wesentlichen homogen mit dem Vibrationsorgan steigen kann.

10. Vibrationssensor nach Anspruch 9, **dadurch gekennzeichnet, dass** sich die reflektierende Schicht des Weiteren über einen Abschnitt der Zelle erstreckt, der benachbart zum Vibrationsorgan ist.

## Claims

1. Vibrating sensor including a cell (2) fixed in a housing (1), the cell including a support member (4) and a vibrating member (9) connected to the support member and driven by an excitation circuit (16) to be sensitive to movements to which the sensor is subjected, **characterized in that** it includes at least one thermal masking member (10) independent of the excitation circuit (16) and extending between the vibrating member and least one wall of the housing (1), the masking member being separate from the cell and arranged to block at least part of the heat transmitted by radiation between the housing and the vibrating member so that the vibrating member is protected from being heated by radiation for a time sufficient to allow the parts of the cell of higher thermal inertia to rise in temperature substantially homogeneously with the vibrating member.

2. Vibrating sensor according to Claim 1, **characterized in that** the masking member (10) is fixed to the housing and spaced therefrom.

3. Vibrating sensor according to Claim 2, **characterized in that** the masking member is supported by a connecting portion (11).

4. Vibrating sensor according to Claim 3, **characterized in that** the connecting portion (11) includes a thickened portion (12).

5. Vibrating sensor according to Claim 3, **characterized in that** the connecting portion (11) is made of a suitable material and has a cross section and a length adapted to control heating by conduction of the masking member (10).

6. Vibrating sensor according to Claim 3, **characterized in that** the connecting portion (11) is opposite a portion of the cell (2) adjacent the vibrating member (9).

7. Vibrating sensor according to Claim 2, **characterized in that** the masking member (10) includes a reflective layer (14) on a side facing the vibrating member (9).

8. Vibrating sensor according to Claim 1, **characterized in that** the masking member (15) is carried by the cell.

9. Vibrating sensor including a cell (2) fixed in a housing (1), the cell including a support member (4) and a vibrating member (9) connected to the support member and driven by an excitation circuit (16) to be sensitive to movements to which the sensor is subjected, **characterized in that** it includes at least one thermal masking member (15) including a reflective layer that is applied to the vibrating member (9) and is independent of the excitation circuit (16), the masking member being arranged to block at least part of the heat transmitted by radiation between the housing and the vibrating member so that the vibrating member is protected from being heated by radiation for a time sufficient to allow the parts of the cell of higher thermal inertia to rise in temperature substantially homogeneously with the vibrating member.

10. Vibrating sensor according to Claim 9, **characterized in that** the reflective layer also extends over a portion of the cell adjacent the vibrating member.
